# EUROPÄISCHE PATENTSCHRIFT

(11) **EP 1 717 211 B1**
(45) Veröffentlichungstag und Bekanntmachung des Hinweises auf die Patenterteilung: **17.10.2007**
(21) Anmeldenummer: 05090187.5
(22) Anmeldetag: 22.06.2005
(51) Int. Cl.: C03B 9/447

(54) **Vorrichtung und Verfahren zum Greifen von Behältermündungen**
Device and method for gripping container openings
Procédé et dispositif pour la préhension de goulots

(30) Priorität: 28.04.2005 DE 102005020699
(43) Veröffentlichungstag der Anmeldung: 02.11.2006
(73) Patentinhaber: GR² GMBH, 10829 Berlin (DE)
(72) Erfinder: Port, Roger, 10829 Berlin (DE)
(74) Vertreter: Hertin, Paul W.

(56) Entgegenhaltungen:
- EP-A- 0 118 300
- EP-A- 1 004 549
- US-A- 3 790 205

## Beschreibung

Die Erfindung betrifft ein Verfahren und eine Vorrichtung zur Führung von Greiferfingern mit oder ohne Mündungseinsätzen bei der Entnahme von fertig geformten Glasbehältern mit einem Gewinde und/oder einem Haltering aus einer Fertigungsstation, wobei die Greiferfinger mittels Greifereinsätzen an einem Greiferkopf befestigt sind.

Als Behälter für Getränke und Flüssigkeiten werden heutzutage nach wie vor Glasflaschen bevorzugt. So werden beispielsweise Bier, aber auch Mineralwässer vorzugsweise in Pfandflaschen aus Glas vertrieben. Da aber Glasflaschen nicht unendlich haltbar sind, können diese nur eine gewisse Anzahl von Recyclingzyklen durchlaufen. Daher ist es notwendig, dass kontinuierlich neue Flaschen als Ersatz hergestellt werden. Zudem werden Glasflaschen auch zunehmend in Einwegsystemen der etablierten Groß- und Einzelhändler verwendet. Des Weiteren wird eine Vielzahl von Lebensmitteln im Einwegsystem in Glasbehältern verkauft.

Die Herstellung von Glasflaschen oder Glasbehältern findet in speziellen Maschinen vollautomatisch statt. Der Formungsprozess des Glasbehälters ist dabei in zwei Prozessstufen unterteilt, der auf bis zu 12, nebeneinander angeordneten Fertigungsstationen erfolgt. Im ersten Schritt der Herstellung findet das sogenannte Vorblasen und Pressen statt und in der zweiten Stufe wird der Glasbehälter fertig geblasen. Die Maschinen zur Herstellung von Glasbehältern sind so ausgelegt, dass bis zu 4 Flaschen parallel in jeder Fertigungsstation hergestellt werden können.

Zur Herstellung einer Glasflasche werden flüssige Glastropfen mit einer Temperatur von ca. 1000°C in eine Vorform auf der Vorformseite der Fertigungsstation geleitet. Darin werden die Glastropfen vorgeblasen und vorgepresst. Während dieses Fertigungsschrittes wird die Mündung der Behälter bereits fertig ausgeformt und eine Aushöhlung zum Fertigblasen in den flüssigen Glastropfen eingebracht. Anschließend wird der nun vorgeformte Glasbehälter, der als Külbel bezeichnet wird, zum Fertigblasen, mit einem Schwenkmechanismus auf die Fertigformseite der Fertigungsstation überführt. Dort umschließen die Fertigformen den Külbel. Der Schwenkmechanismus gibt die Mündung frei und schwenkt zurück auf die Vorformseite, um einen neuen Fertigungszyklus zu starten.

Der Külbel wird während der endgültigen Ausformung des Glasbehälters mit einem Haltering unterhalb seiner Mündung in der Fertigform gehalten. In der Fertigform wird der Külbel nun von einem Blaskopf unter Einsatz von Druckluft und einem Vakuum zum fertigen Behälter ausgeformt. Der fertiggeformte Behälter wird danach von einem speziellen Greifermechanismus in einer Kreisbewegung aus der Fertigform gehoben. Anschießend werden die so gerade ausgeformten Glasbehälter über eine Abstellplatte zum Auskühlen gehalten und anschließend dort abgestellt. Anschließend schwenkt der Greifermechanismus für den nächsten Fertigungszyklus in seine Warteposition zurück. Von der Abstellplatte werden die Behälter durch einen Ausschieber zum Abtransport auf das Transportband geschoben. Die Flaschen sind nun fertig hergestellt und für das Befüllen bereit.

Beim Greifen der fertigen Behälter schwenkt der Greiferarm über die Fertigform, so dass die an den Greifereinsätzen befindlichen Greiferfinger mit oder ohne Mündungseinsätzen die Mündungen der Behälter greifen können. Vorzugsweise ist der Greiferarm mit einem drehbar gelagerten Greiferkopf versehen, an dem bis zu vier Greifereinsätze befestigt werden können. Abhängig von der Anzahl der Greifereinsätze können entsprechend viele Behälter bewegt werden. Bei der Schwenkbewegung des Greiferarms bleibt der Greiferkopf immer in der gleichen horizontalen Ausrichtung, so dass die bis zu vier Behälter immer in ihrer Ausgangsrichtung verbleiben.

Bei den aus dem Stand der Technik bekannten Vorrichtungen zum Greifen von Behältermündungen führen die Greiferfinger, die an den Hebeln der Greifereinsätze befestigt werden, vorzugsweise eine kreisförmige Bewegung um den Mittelpunkt eines Drehbolzens aus. Die Greiferfinger werden also von der Seite, auf einer Kreisbahn, um die zu greifenden Mündungen der Behälter bewegt. Diese Bewegung wird mittels eines Pneumatikkolbens erreicht, der durch Druckbeaufschlagung aus einem Zylinder die Bewegung von Gelenkstangen, welche über einen Gelenkbolzen gelagert sind, bewirken. Durch diese Bewegung werden die Greiferfinger in Bewegung gesetzt und um die Mündung eines Behälters geschlossen. In dieser Mechanik eines Greifereinsatzes sind jeweils Federn angebracht, die dazu dienen, den Kolben wieder in seine ursprüngliche Position zu bringen, sobald der Druck aus einem Zylinder nicht mehr anliegt. Dadurch werden die Greiferfinger wieder geöffnet und eine darin eventuell befindliche Mündung eines Behälters wird wieder freigesetzt.

Eine Vorrichtung zum Transferieren von Glasartikeln aus einer Maschine zum Formen von Glasbehältern auf ein Förderband oder andere Ablageflächen offenbart die US 1,808,689. Die Vorrichtung weist einen schwenkbaren Arm auf, an dessen Enden Greifer montiert sind. Diese Greifer sind mit einem scherenförmigen Hebelmechanismus versehen, der durch einen Kolben bewegt wird. Die Aufnahmevorrichtung des Greifers der US 1,808,689 bewegt sich so von zwei gegenüberliegenden Seiten auf einer Kreisbahn hin zur Behältermündung und umschließt diese oberhalb der Mündung und unterhalb eines Ringes an der Behältermündung.

Der in der US 1,843,285 offenbarte Greifer einer Vorrichtung zum Transfer von Glasartikeln ist derart ausgestaltet, dass ein Finger in die Mündung des Glasbehälters greift und die Behältermündung zusätzlich noch unterhalb eines Halterings von außen, durch zwei halbkreisförmige Finger einer Zange umschlossen wird. Der Mechanismus zum Öffnen und Schließen des Greifers entspricht im Wesentlichen dem aus der US 1,808,689 bekannten Hebelmechanismus, der die halbkreisförmigen Finger der Zange auf einer Kreisbahn beidseitig an die Behältermündung heranführt.

Gemäß einer Ausführungsform der in der US 4,379,581 beschriebenen Vorrichtung zum Transfer neu geformter Glasbehälter, ist ein Greifer vorgesehen, der mittels eines scherenförmigen Hebelsystems das Öffnen und Schließen der Zangen, welche die Behältermündung umschließen, bewerkstelligt. Auch bei dieser Ausführungsform eines Greifereinsatzes bewegen sich die Teile der Greiferfinger, welche die Behältermündung umschließen, auf einer Kreisbahn beidseitig in Richtung der Behältermündung.

Während des Fertigungsprozesses eines Behälters warten die Greiferfinger bis der Behälter in der zweiten Phase des Herstellungsprozesses fertig ausgeformt ist und sich die Formhälften wieder geöffnet haben. Erst mit Abschluss dieses Prozesses schwenken die Greiferfinger um die Mündung des Behälters und heben diesen aus der Form.

Die über der Mündung befindlichen Greiferfinger werden vom Greifereinsatz geschlossen und greifen die Mündung des Behälters unterhalb des Halterings der den Kübel in der Fertigungsform gehalten hat. Dazu müssen die greifenden Kontaktflächen der Finger unterhalb der Oberkante der Formhälften positioniert gewesen sein, da sonst die Finger auf den Haltering oder in das Gewinde der Mündung greifen würden und somit Beschädigungen an der grade geformten Flasche hervorrufen würden.

Da während des Herstellungsprozesses einer Flasche für jeden Fertigungsschritt nur möglichst kurze Zeit zur Verfügung steht, besitzen die Kolben eines Greifereinsatzes eine möglichst große Fläche zum Greifen und einen kleinen Hub. Dadurch wird es zudem erleichtert Flaschen mit einem hohen Gewicht zu greifen.

Aufgrund einer Vielzahl von Verbesserungen des Fertigungsprozesses von Flaschen wurde der gesamte Herstellungsprozess deutlich verkürzt. Insgesamt braucht eine der oben geschilderten Maschinen für einen Fertigungszyklus inzwischen nur noch bis zu 3 Sekunden für die Herstellung einer Flasche. Um diese Geschwindigkeiten erreichen zu können, war es unter anderem notwendig, auch bei dem Greifen und Herausheben der Behälter während des Fertigungsprozesses Zeit einzusparen.

Dies wurde dadurch erreicht, dass die Mündungen der Behälter schon vor dem Öffnen der Formhälften des zweiten Fertigungsprozesses mit Hilfe von entsprechend geformten Mündungseinsätzen am Gewinde oder mit Hilfe eines zweiten Halterings unterhalb des zweiten Ringes gegriffen wurden. Durch dieses vorzeitige Greifen, während die Fertigform des zu formenden Behälters noch geschlossen ist, kann sich der gerade in der Herstellung befindliche Behälter nicht bewegen. Da die kreisförmig bewegten Greiferfinger oder daran montierte Mündungseinsätze der aus dem Stand der Technik bekannten Vorrichtungen sowohl eine horizontale, als auch eine vertikale Bewegung auf einer Kreisbahn ausführen, sind Kollisionen der Finger oder daran befindlicher Mündungseinsätze mit der Mündung des gerade geformten Behälters nicht auszuschließen. Dadurch können Schädigungen an der Mündung oder an den Fingern der Greifvorrichtung hervorgerufen werden.

Zudem birgt die vertikale Bewegung des gesamten Greifarms die Gefahr, dass sich, aufgrund des vertikalen Impulses, der Greiferfinger unkontrolliert schließt, da der Kolben ja nur mit einer Feder in der oberen Position, in der die Greifvorrichtung geöffnet ist, gehalten wird. Diese unkontrollierte Bewegung des Greiferfingers kann ebenfalls Beschädigungen an der Mündung oder an den Fingern des Greifers verursachen.

Ausgehend von diesem Stand der Technik ist es die Aufgabe der vorliegenden Erfindung, ein Verfahren und eine Vorrichtung zum sicheren Greifen einer Behältermündung ohne deren Beschädigung oder der Beschädigung der Greiferfinger unter Aufrechterhaltung möglichst kurzer Fertigungszyklen zur Verfügung zu stellen.

Gelöst wird diese Aufgabe durch die Merkmale der selbstständigen Ansprüche 1 und 6.

Erfindungsgemäß ist demnach ein Verfahren zur Führung von Greiferfingern mit oder ohne Mündungseinsätzen, welche mittels Greifereinsätzen an einem Greiferkopf einer Fertigungsstation befestigt sind, bei der Entnahme von fertig geformten Glasbehältern mit einem Gewinde und/oder einem Haltering vorgesehen, wobei die Bewegung der Greiferfinger immer horizontal erfolgt.

In einer bevorzugten Ausführung wird die horizontale Bewegung der Greiferfinger mit oder ohne Mündungseinsätzen durch eine geeignete Führung in den Greiferhalterungen der Greifereinsätze bewerkstelligt. Bei der erfindungsgemäß vorgesehenen Führung handelt es sich um eine Zwangsführung, welche lediglich eine linear horizontale Bewegung der Greiferfinger, mit oder ohne Mündungseinsätzen, zulässt.

Erfindungsgemäß ist weiterhin vorgesehen, dass die horizontale Führung der Greiferfinger mit oder ohne Mündungseinsätzen kraftschlüssig durch eine Mechanik bewirkt wird. Die Bewegung der Mechanik und damit auch der Greiferfinger mit oder ohne Mündungseinsätzen erfolgt durch einen pneumatischen oder hydraulischen Kolben.

Bei dem erfindungsgemäßen Verfahren ist es möglich, die Geschwindigkeit der horizontalen Bewegung der Greiferfinger mit oder ohne Mündungseinsätzen durch eine gradlinige oder kurvenförmige Ausführung des Verbindungselementes der Greiferhalterung mit dem Kolben, welcher die Bewegung erzeugt, zu steuern. So besteht die Möglichkeit, eine Bewegungsgeschwindigkeit zu wählen, welche an den jeweiligen Herstellungsprozess angepasst ist.

Ein weiterer Gegenstand der vorliegenden Erfindung ist eine Vorrichtung zur Führung von Greiferfingern mit oder ohne Mündungseinsätzen, welche mittels Greifereinsätzen an einem Greiferkopf befestigt sind, bei der Entnahme von fertig geformten Glasbehältern mit einem Gewinde und/oder einem Haltering aus einer Fertigungsstation, bei der die Greifereinsätze wenigstens zwei Greiferfinger mit oder ohne Mündungseinsätzen aufweist, die ausschließlich horizontal bewegbar sind.

Der Greifereinsatz einer erfindungsgemäßen Vorrichtung weist in einer bevorzugten Ausführungsform Fingerhalter auf, welche derart ausgestaltet sind, dass die Greiferfinger ausschließlich horizontal bewegbar sind und so die Greiferfinger mit oder ohne Mündungseinsätzen zwangsweise horizontal führen. In einer alternativen Ausgestaltung weist ein Greifereinsatz horizontale Gleitstangen auf, an denen die Halterungen bewegbar sind, und sich deshalb ausschließlich gradlinig und horizontal bewegen können. Die Fingerhalter sind erfindungsgemäß kraftschlüssig über ein Verbindungselement mit einem pneumatischen oder hydraulischen Kolben verbunden. Dadurch kann die Bewegung des Kolbens übertragen werden.

Die Bewegung der Greiferfinger mit oder ohne Mündungseinsätzen erfolgt als linear horizontale Bewegung, so dass eine Kollision der Finger mit dem Gewinde vermieden wird. Die Ausrichtung der Finger kann bei geöffneten Fingern erfolgen. Eine vertikale Bewegung der Finger durch den vertikalen Impuls des Greiferarms und - kopfes führt nicht zu einer vibrierenden Schließbewegung bei der Positionierung der Finger über der Mündung entgegen der Rückstellfeder, da erfindungsgemäß eine horizontal Zwangsführung vorgesehen ist.

Durch die Ausführung des Verbindungselementes kann die horizontale Bewegung der Greiferfinger in Ihrer Geschwindigkeit angepasst werden. Durch geeignete Kurvenformen des Verbindungselementes mit vertikaler Ausrichtung im oberen Teil der Führung kann der Reibungsverlust beim Beginn der Schließbewegung reduziert werden. Durch Änderung des Steigungswinkels des Verbindungselementes kann der Verfahrweg der Finger angepasst werden.

Durch die Bewegung der Finger mit oder ohne Mündungseinsätzen parallel zueinander wird eine Kollision beim Greifen der Mündung vermieden, da keine vertikale Bewegung der Finger erfolgt.

Da die Grenzwerte für Höhenpositionen der Greifer im Bezug auf die Fertigungsstation standardisiert sind, und auch die Greiferköpfe mit den Öffnungen für die Greifereinsätze in der Glasindustrie einem Standard unterliegen, muss die gleiche Öffnungsweite der Finger bei dem gleichem Raumangebot erfolgen. Eine Hebelkonstruktion kommt hierbei nicht in Frage, da der horizontale Verfahrweg größer ist als der vertikale Hub des Kolbens, und eine Hebelkonstruktion nicht in den Bereich der Mündung herein reichen darf.

Aus diesem Grund wird die horizontale Bewegung der Finger erfindungsgemäß durch eine Zwangsführung in den Halterungen der Finger erreicht. Der Kolben fährt hierbei bei Druckbeaufschlagung aus dem Zylinder und überträgt herbei eine Kraft über den Bolzen und das Verbindungselement auf die Halterungen der Finger. Da die Zwangsführung eines Greifereinsatzes entweder durch die horizontal ausgestalteten Halterungen der Finger gebildet wird oder die Halterungen an horizontalen Gleitstangen geführt sind, bewirkt die Übertragung der Bewegung auf die Halterungen der Finger eine horizontale Bewegung. Die Halterungen der Finger fahren zusammen und schließen die Greiferfinger.

Das Verbindungselement kann geradlinig oder in Kurvenform ausgeführt sein, so dass eine Beeinflussung der horizontalen Geschwindigkeit der Finger möglich ist. Durch eine Änderung des Steigungswinkels des Verbindungselementes kann der horizontale Verfahrweg der Finger geändert werden, oder mit verkürztem Hub die erforderliche Zeit für das Schließen beeinflusst werden.

Eine vertikale Ausrichtung des Verbindungselementes im oberen Bereich kann Reibungsverluste beim Beginn der Schließbewegung reduzieren.

Das Ausrichten der Finger zur Mündung beim Einstellen der Maschine kann auch bei geöffneten Fingern erfolgen, so dass bei der Einrichtung Zeit eingespart wird.

Weitere vorteilhafte Maßnahmen sind in den übrigen Unteransprüchen beschrieben; die Erfindung wird anhand von Ausführungsbeispielen und der nachfolgenden Figuren näher beschrieben; es zeigt:
- **Figur 1a, 1b**: Schematische Seitenansicht von Greiferfingern des Stands der Technik in geöffnetem (Fig. 1a) und geschlossenem Zustand (Fig. 1b)
- **Figur 2a, 2b**: Schematische Seitenansicht von erfindungsgemäßen Greiferfingern in geöffnetem (Fig. 2a) und geschlossenem Zustand (Fig. 2b)
- **Figur 3**: Vergleich der Bewegungsbahnen eines Greiferfingers aus dem Stand der Technik (linker Teil) mit einem erfindungsgemäßen Greiferfinger (rechter Teil)
- **Figur 4a**: Seitliche Aufsicht eines erfindungsgemäßen Greifereinsatz mit geöffneten Greiferfingern

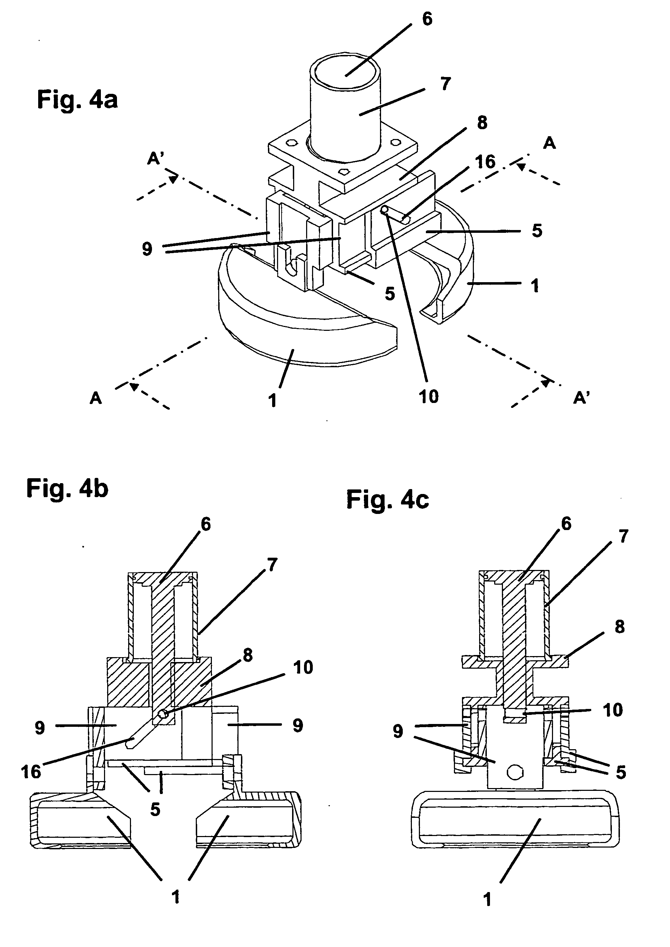

- **Figur 4a, 4b**: Ansichten der in Fig. 4a angegebenen Schnittebenen A-A (Fig. 4b) und A'-A' (Fig. 4c)

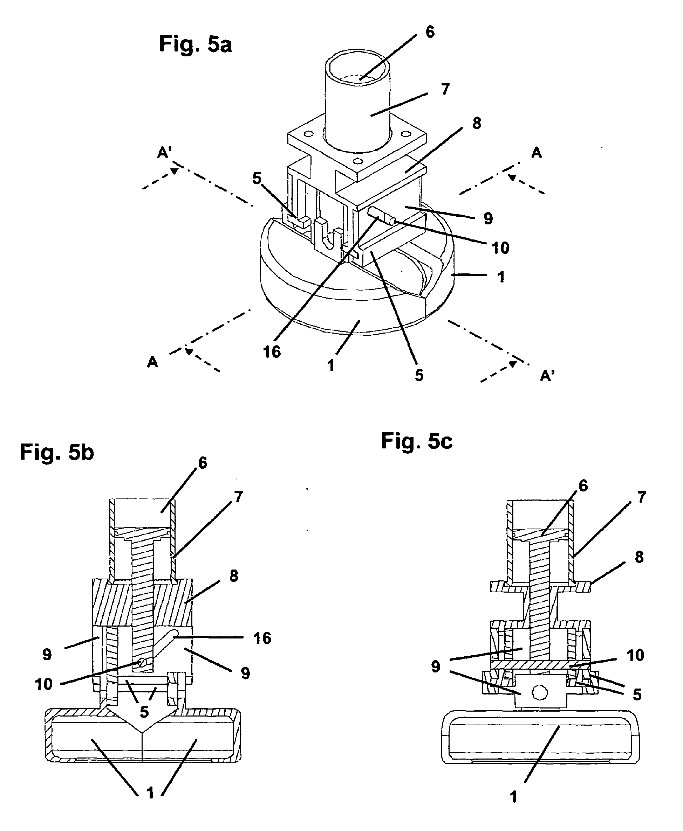

- **Figur 5a**: Seitliche Aufsicht auf einen erfindungsgemäßen Greifereinsatz mit geschlossenen Greiferfingern
- **Figur 5b, 5c**: Ansichten der in Fig. 5a angegebenen Schnittebenen A-A (Fig. 5b) und A'-A' (Fig. 5c)

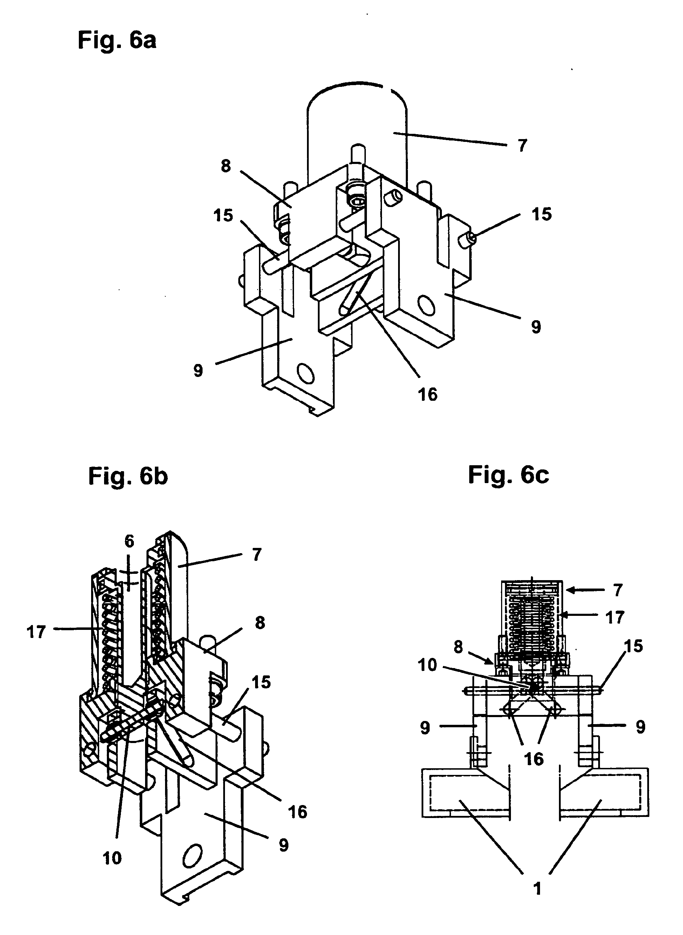

- **Figur 6a**: Perspektivisches Ansicht eines Greifereinsatzes mit Greiferhaltern, die an Gleitstangen geführt werden
- Figur 6b: Querschnitt durch einen Greifereinsatz mit an Gleitstangen geführten Greiferhalterungen
- Figur 6c: Durchsicht durch einen Greifereinsatz mit an Gleitstangen geführten Greiferhalterungen

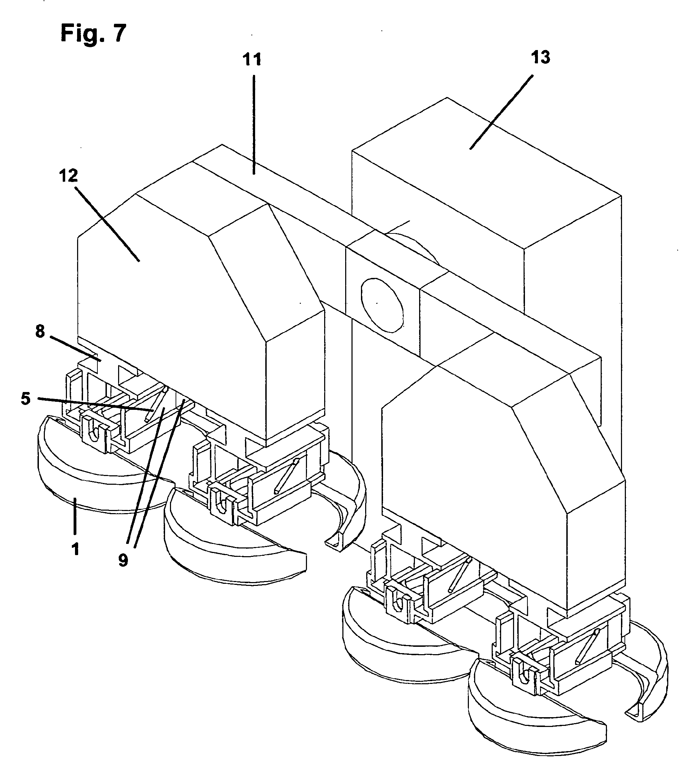

- Figur 7: Seitliche Ansicht eines Greifermechanismus

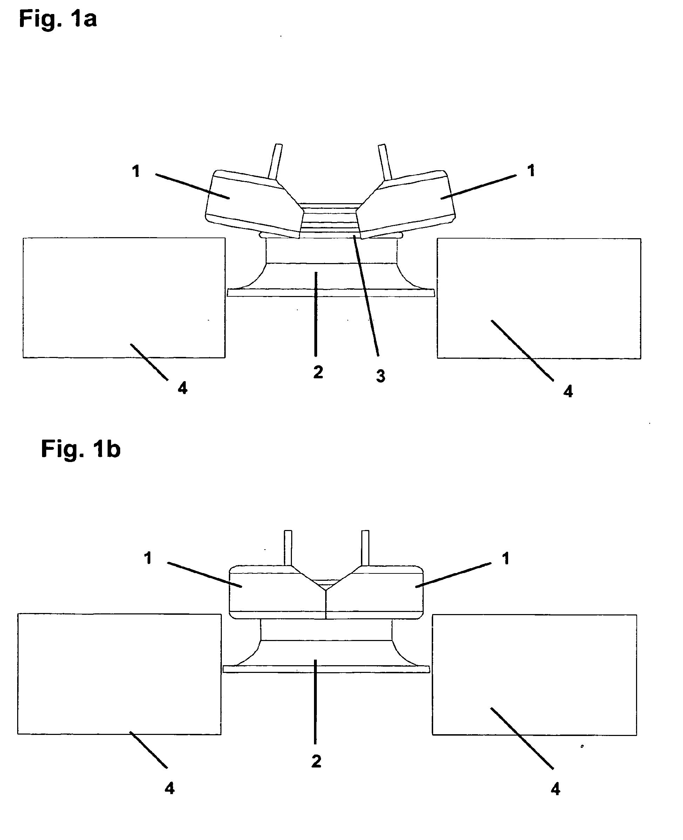

Figur 1 a und 1b zeigen eine schematische Seitenansicht von Greiferfingern 1 aus dem Stand der Technik in geöffnetem (Fig. 1a) und geschlossenem Zustand (Fig. 1b). Während des Fertigungsprozesses warten die Greiferfinger 1, bis der Behälter fertig ausgeformt ist und sich die Formhälften 4 geöffnet haben. Die Behältermündung 2 liegt dann frei. Die Greiferfinger 1 schwenken über die Behältermündung 2 (Fig. 1a) und die Greiferfinger 1 werden geschlossen. Dabei greifen diese die Behältermündung 2 unterhalb eines Halterings 3 (Fig. 1b).

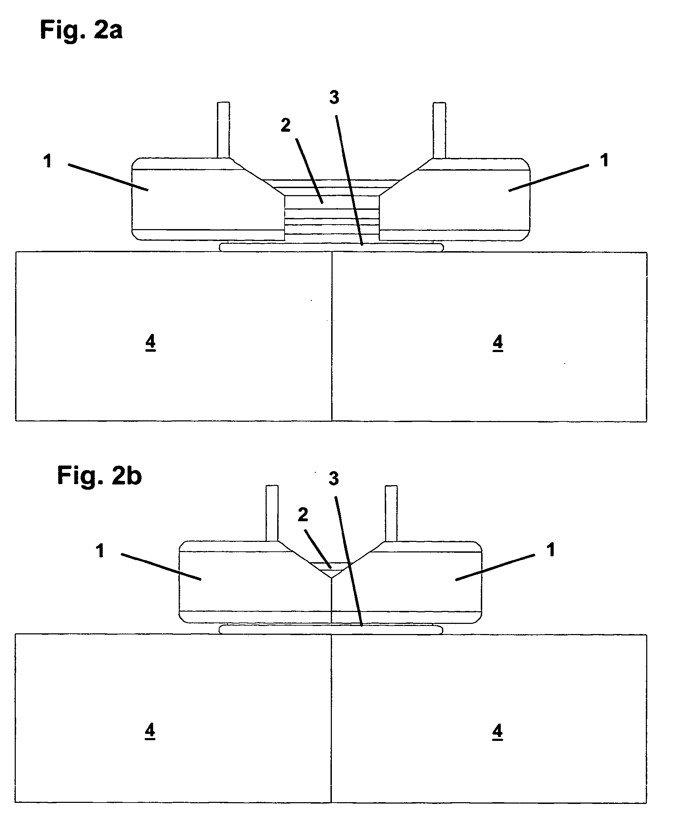

In den Figuren 2a und 2b ist eine schematische Seitenansicht von erfindungsgemäßen Greiferfingern in geöffnetem (Fig. 2a) und geschlossenem Zustand (Fig. 2b) dargestellt. Die Greiferfinger 1 werden im Gegensatz zu den bisher bekannten Verfahren zur Aufnahme der Behälter ausschließlich horizontal bewegt. Die Bewegung der Greiferfinger 1 erfolgt dadurch entlang der bzw. parallel zu den Gewinderingen 14.

Diese neuartige Bewegung der Greiferfinger 1 ist bezüglich der Verkürzung der Fertigungszyklen vorteilhaft. Wie aus den Figuren 2a und 2b auch ersichtlich ist, wird zur Beschleunigung des Herstellungsprozesses der Behälter die Behältermündung 2 schon gegriffen, wenn die Formhälften 4 den Behälter noch umschließen. Problematisch beim Greifen eines Behälters, der durch die Formhälften 4 noch gehalten wird, ist einerseits, dass der Haltering 3 nicht von den Greiferfingern 1 umschlossen werden kann. Andererseits kann sich der Behälter nicht bewegen, da er von den Formhälften noch gehalten und somit auch fixiert wird.

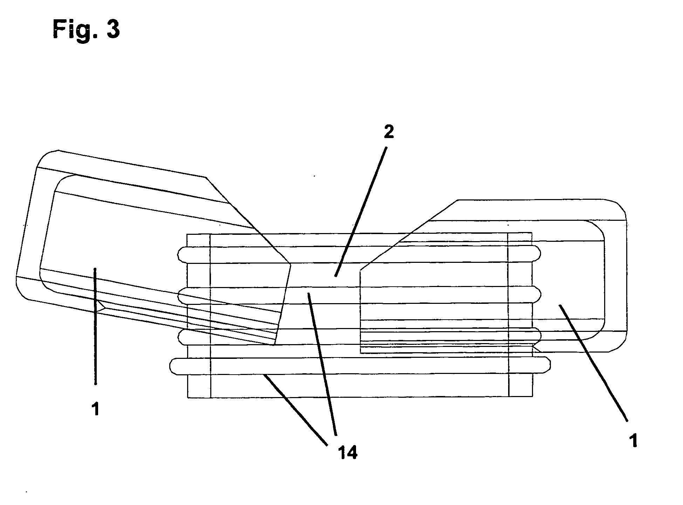

Wie sich aus Figur 3 ergibt, die vergleichend die Bewegungsbahnen eines Greiferfingers 1 aus dem Stand der Technik (linker Teil) und eines erfindungsgemäßen Greiferfinger 1 (rechter Teil) beim Umschließen einer Behältermündung 2 zeigt, entsteht bei den kreisförmig bewegten Greiferfingern ein Winkel zwischen den Greiferfingern 1 und den Gewinderingen 14. Ursächlich dafür ist der Umstand, dass sich die kreisförmige Bewegung eines Greiferfingers 1 aus dem Stand der Technik beim Umschließen der Behältermündung 2 aus einer horizontalen und einer vertikalen Bewegung zusammensetzt. Die Greiferfinger 1 sind, um die Stellung der Greiferfinger 1 zu den Gewinderingen 14 darstellen zu können, transparent dargestellt.

Zudem wir durch die vertikale Bewegung des Greiferarmes (s. Figur 6), durch den die Greiferfinger letztlich geführt werden, ein vertikaler Impuls über den Winkel, in dem die Greiferfinger 1 zu den Gewinderingen 14 stehen, auf die Greiferfinger 1 übertragen. Da die Formhälften, wie in Figur 2b gut zu erkennen ist, noch den Behälter halten, kann dieser vertikale Impuls zu Beschädigungen an dem gerade erst fertig geformten Behälter führen.

Figur 4a zeigt in eine seitliche Aufsicht auf einen erfindungsgemäßen Greifereinsatz mit geöffneten Greiferfingern 1, welche an den Halterungen 9 der Finger 1 befestigt sind. Die horizontale Bewegung der Greiferfinger 1 wird durch eine Zwangsführung 5 an der Unterseite der Halterungen 9 erreicht. Ein Kolben 6 fährt unter Druckbeaufschlagung aus einem Zylinder 7 und überträgt dabei eine Kraft über den Bolzen 10 und das Verbindungselement 16 auf die Halterungen 9. Da die Zwangsführung 5 der Halterungen 9 horizontal ausgestaltet ist, bewirkt die die Übertragung der Bewegung eine Umsetzung der vertikalen Bewegung des Kolbens 6 in eine horizontale Bewegung der Halterungen 9 und somit letztlich auch der Greiferfinger 1. Die Halterungen 9 der Finger 1 fahren bei der Druckbeaufschlagung des Kolbens 6 zusammen und schließen die Greiferfinger 1 mit einer ausschließlich horizontalen Bewegung.

In Figur 4b ist eine Aufsicht auf die in Fig. 4a angegebene Schnittebene A-A eines Greifereinsatzes mit geöffneten Greiferfingern zu sehen. Auch in dieser Schnittzeichnung ist die Verbindung des Kolbens 6 über den Bolzten 10 und das Verbindungselement 16 mit der Zwangsführung 5 zu sehen, welche erfindungsgemäß eine vertikale Bewegung des Kolbens 6 in eine horizontale Bewegung der Halterungen 9 und der Greiferfinger 1 umsetzt. An den Halterungen 9 sind die Greiferfinger 1 befestigt, welche sich aufgrund der Zwangsführung 5 ausschließlich horizontal bewegen.

Figur 4c zeigt eine Aufsicht auf die in Figur 4a angegebene Schnittebene A'-A' eines Greifereinsatzes mit geöffneten Greiferfingern. Der Greiferfinger 1 ist an dem Halterungen 9 befestigt, auf welche das Verbindungselement 16, welches durch den Bolzen 10 mit dem Kolben 6 verbunden ist, die Bewegung des Kolbens 6 überträgt. Der Kolben 6 bewegt sich in dem Zylinder 7.

In Figur 5a ist eine seitliche Aufsicht auf einen erfindungsgemäßen Greifereinsatz mit geschlossenen Greiferfingern 1 dargestellt. In dieser Position der Greiferfinger 1, befindet sich der Kolben 6 in einer unteren Position innerhalb des Zylinders 7. Kolben 6 und Zylinder 7 befinden sich innerhalb des Zylinderkopfes 8. Die vertikale Bewegung des Kolbens 6 wird über den Bolzens 10 und das Verbindungselement 16 auf die Halterungen 9 übertragen, an deren Unterseite sich in der dargestellten Ausführungsform die Zwangsführung 5 befindet. Die Ausgestaltung der Zwangsführung 5 bewirkt die Umsetzung der vertikalen Bewegung des Kolbens 6 in eine horizontale Bewegung der Halterungen 9 und somit der Greiferfinger 1 umgesetzt.

Die Figuren 5b und 5c zeigen analog zu den Figuren 4b und 4c Aufsichten auf die in Fig. 5a angegebenen Schnittebenen A-A (Fig. 5b) und A'-A' (Fig. 5c) eines Greifereinsatzes mit geschlossenen Greiferfingernl. Sowohl in den Abbildungen 4a - c, als auch in den Abbildungen 5a - c ist das Verbindungselement 16 zur Umsetzung und Erzielung der horizontalen Bewegung der Greiferfinger 1 gradlinig dargestellt. Erfindungsgemäß sind aber auch bogenförmig ausgestaltete Verbindungselemente 16 vorgesehen. Durch eine derartige Ausführungsform kann die Geschwindigkeit, mit der die Greiferfinger 1 geöffnet oder geschlossen werden, beeinflusst werden.

In Figur 6a ist eine perspektivisches Ansicht eines Greifereinsatzes mit Greiferhaltern, die an Gleitstangen geführt werden, dargestellt. An den Greifereinsätzen sind keine Greiferfinger 1 befestigt. Die horizontale Zwangsführung der Fingerhalter 9 wird bei dieser Ausführungsform nicht durch die Ausgestaltung der Unterseite der Fingerhalter 9 selbst bewirkt (Fig. 4, 5), sondern dadurch, dass die Halterungen 9 an horizontalen Gleitstangen 15 geführt werden. Die Gleitstangen 15 sind an dem Zylinderkopf 8 befestigt, welcher sich unterhalb des Zylinders 7 befindet. Die Bewegung der Fingerhalter 9 auf den Gleitstangen 15 wird durch das Verbindungselement 16 von dem Kolben (nicht dargestellt) übertragen.

Figur 6b zeigt einen Querschnitt durch einen Greifereinsatz mit an Gleitstangen 15 geführten Fingerhalter 9. innerhalb des Zylinders 7 ist der Kolben 6 zu erkennen sowie die Kolbenfeder 17, welche bei fehlendem Druck auf den Kolben 6 die Rückstellung und Öffnung der Greiferfinger (nicht abgebildet) bewirkt. An dem Zylinderkopf 8 sind die Gleitstangen 15 befestigt, Die Bewegung des Kolbens 6 wird über den Bolzen 10 und das Verbindungselement 16 auf die Fingerhalter 9 übertragen. Da diese an den horizontalen Gleitstangen 16 geführt werden, ist ausschließlich eine horizontale Bewegung der Fingerhalter 9 möglich.

Figur 6c zeigt eine Durchsicht durch einen transparenten Greifereinsatz mit den paarweise angeordneten Greiferfingern 1. Diese sind an den Fingerhaltern 9 befestigt, welche einerseits an den horizontalen Gleitstangen 15 geführt werden und auf die andererseits über das Verbindungselement 16 die Bewegung des Kolbens übertragen wird. Die Gleitstangen 15 sind an dem Zylinderkopf 8 befestigt. Innerhalb des Zylinders 7 befindet sich noch die Kolbenfeder 17 für die Rückstellung der Greiferfinger 1 bei fehlender Druckbeaufschlagung auf den Kolben.

Figur 7 zeigt in einer Übersicht eine seitliche Ansicht eines Greifermechanismus 13, an dem über einen Greiferarm 11, jeweils zwei Greiferköpfe 12 mit je zwei erfindungsgemäßen Greifereinsätzen befestigt sind. Ein Greifereinsatz besteht aus dem in Figur 6 nicht sichtbaren Zylinder 7 und dem ebenfalls nicht zu sehenden Kolben 6, dem Zylinderkopf 8, den Halterungen 9 der Finger 1 , den paarweise angeordneten Greiferfingern 1, sowie der Zwangsführung 5 und dem Bolzen 10, welcher die Zwangsführung 5 mit dem Kolben 6 verbindet.

### Bezugszeichenliste

- 1: Greiferfinger
- 2: Behältermündung
- 3: Haltering
- 4: Formhälften
- 5: Zwangsführung
- 6: Kolben
- 7: Zylinder
- 8: Zylinderkopf
- 9: Fingerhalter
- 10: Bolzen
- 11: Greiferarm
- 12: Greiferkopf
- 13: Greifermechanismus
- 14: Gewinderinge
- 15: Gleitstangen
- 16: Verbindungselement
- 17: Kolbenfeder

## Patentansprüche

1. Verfahren zur Führung von Greiferfingern mit oder ohne Mündungseinsätzen bei der Entnahme von fertig geformten Glasbehältern mit einem Gewinde und/oder einem Haltering aus einer Fertigungsstation, wobei die Greiferfinger (1) mittels Fingerhaltern (9) an einem Greiferkopf (12) befestigt sind und die Bewegung der Greiferfinger ausschließlich gradlinig horizontal erfolgt.

2. Verfahren nach Anspruch 1, wobei die horizontale Bewegung der Greiferfinger (1) mit oder ohne Mündungseinsätzen durch eine geeignete Zwangsführung (5) in den Fingerhaltern (9) des Greifereinsätze bewerkstelligt wird.

3. Verfahren nach Anspruch 1 oder 2, wobei die horizontale Zwangsführung (5) der Greiferfinger (1) mit oder ohne Mündungseinsätzen kraftschlüssig durch eine Mechanik (10, 16) bewegt wird.

4. Verfahren nach wenigstens einem der vorherigen Ansprüche, wobei die horizontale Bewegung der Greiferfinger (1) mit oder ohne Mündungseinsätzen durch die kraftschlüssige Übertragung der Bewegung eines pneumatischen oder hydraulischen Kolbens (6) erfolgt.

5. Verfahren nach wenigstens einem der vorherigen Ansprüche, wobei die Geschwindigkeit der horizontalen Bewegung der Greiferfinger (1) mit oder ohne Mündungseinsätzen durch eine gradlinige oder kurvenförmige Ausgestaltung des Verbindungselementes (16) in den Greifereinsätzen gesteuert wird.

6. Vorrichtung zur Führung von Greiferfingern mit oder ohne Mündungseinsätzen bei der Entnahme von fertig geformten Glasbehältern mit einem Gewinde und/oder einem Haltering aus einer Fertigungsstation, wobei die Greiferfinger mittels Greifereinsätzen an einem Greiferkopf befestigt sind, **dadurch gekennzeichnet, dass** die Greifereinsätze wenigstens zwei Greiferfinger (1) mit oder ohne Mündungseinsätzen aufweisen, die ausschließlich gradlinig horizontal bewegbar sind.

7. Vorrichtung nach Anspruch 6, wobei die Fingerhalter (9) eines Greifereinsatzes derart ausgestaltet sind, dass die Greiferfinger (1) ausschließlich horizontal bewegbar sind, oder die Fingerhalter (9) ausschließlich an horizontalen Gleitstangen (15) bewegbar sind.

8. Vorrichtung nach Anspruch 6 oder 7, wobei der Greifereinsatz eine Mechanik (10, 16) aufweist, die kraftschlüssig mit der Zwangsführung (5) der Greiferhalterung zur horizontalen Bewegung der Greiferfinger mit oder ohne Mündungseinsätzen verbunden ist.

9. Vorrichtung nach Anspruch 8, wobei es sich bei der Mechanik zur Bewegung der Greiferfinger mit oder ohne Mündungseinsätzen um einen pneumatischen oder hydraulischen Kolben (6) handelt.

10. Vorrichtung nach wenigstens einem der vorhergehenden Ansprüche, wobei vorhandene Verbindungselemente (16) zur Regulierung der Öffnungs- und Schließgeschwindigkeit der Greiferfinger (1) mit oder ohne Mündungseinsätzen gradlinig oder kurvenförmig ausgestaltet sind.

## Claims

1. A method of guiding gripper fingers with or without port inserts during removal of ready-molded glass containers with a thread and/or a clamp ring from a manufacturing station, said gripper fingers (1) being fastened to a gripper head (12) by means of finger holders (9), and the movement of the gripper fingers proceeding entirely horizontally in a straight line.

2. The method according to claim 1, in which method the horizontal movement of the gripper fingers (1) with or without port inserts is accomplished by means of a suitable restricted guidance (5) within the finger holders (9) of the gripper inserts.

3. The method according to claim 1 or 2, wherein the horizontal restricted guidance (5) of the gripper fingers (1) with or without port inserts is driven non-positively by a mechanism (10, 16).

4. The method according to at least one of the preceding claims, wherein the horizontal movement of the gripper fingers (1) with or without port inserts proceeds via non-positive transfer of the movement of a pneumatic or hydraulic piston (6).

5. The method according to at least one of the preceding claims, wherein the velocity of the horizontal movement of the gripper fingers (1) with or without port inserts is controlled by means of a straight or curved design of the connecting element (16) within the gripper inserts.

6. A device for guiding gripper fingers with or without port inserts during removal of ready-molded glass containers with a thread and/or a clamp ring from a manufacturing station, said gripper fingers being fastened to a gripper head by means of finger holders, **characterized in that** the gripper inserts have at least two gripper fingers (1) with or without port inserts, which are moveable solely horizontally in a straight line.

7. The device according to claim 6, wherein the finger holders (9) of one gripper insert are designed in such a way that the gripper fingers (1) are moveable solely horizontally, or the finger holders (9) are moveable solely on horizontal slide bars (15).

8. The device according to claim 6 or 7, wherein the gripper insert has a mechanism (10, 16) in non-positive connection with the restricted guidance (5) of the gripper holder to have horizontal movement of the gripper fingers with or without port inserts.

9. The device according to claim 8, wherein the mechanism for moving the gripper fingers with or without port inserts is a pneumatic or hydraulic piston (6).

10. The device according to at least one of the preceding claims, wherein existing connecting elements (16) used to control the opening and closing speed of the gripper fingers (1) with or without port inserts have a straight or curved design.

## Revendications

1. Procédé de guidage de doigts de préhenseur avec ou sans inserts d'orifice lors de la prise de récipients en verre façonnés finis comportant un filetage et/ou une bague de maintien à partir d'un poste de fabrication, dans lequel les doigts de préhenseur (1) sont fixés à une tête de préhenseur (12) au moyen de supports de doigt (9) et le mouvement des doigts de préhenseur s'effectue exclusivement horizontalement en ligne droite.

2. Procédé selon la revendication 1, dans lequel le mouvement horizontal des doigts de préhenseur (1) avec ou sans inserts d'orifice est exécuté par un guidage forcé (5) approprié dans les supports de doigt (9) des inserts de préhenseur.

3. Procédé selon la revendication 1 ou 2, dans lequel le guidage forcé horizontal (5) des doigts de préhenseurs (1) avec ou sans inserts d'orifice est mis en mouvement par une mécanique (10, 16), par liaison de force.

4. Procédé selon au moins l'une des revendications précédentes, dans lequel le mouvement horizontal des doigts de préhenseur (1) avec ou sans inserts d'orifice s'effectue par la transmission par liaison de force du mouvement d'un piston (6) pneumatique ou hydraulique.

5. Procédé selon au moins l'une des revendications précédentes, dans lequel la vitesse du mouvement horizontal des doigts de préhenseur (1) avec ou sans inserts d'orifice est commandée par une configuration rectiligne ou courbée de l'élément d'assemblage (16) dans les inserts de préhenseur.

6. Dispositif de guidage de doigts de préhenseur avec ou sans inserts d'orifice lors de la prise de récipients en verre façonnés finis comportant un filetage et/ou une bague de maintien à partir d'un poste de fabrication, dans lequel les doigts de préhenseur sont fixés à une tête de préhenseur au moyen d'inserts de préhenseur, **caractérisé en ce que** les inserts de préhenseur comportent au moins deux doigts de préhenseur (1) avec ou sans inserts d'orifice, qui peuvent être mis en mouvement exclusivement horizontalement de manière rectiligne.

7. Dispositif selon la revendication 6, dans lequel les supports de doigt (9) d'un insert de préhenseur sont configurés de telle sorte que les doigts de préhenseur (1) peuvent être mis en mouvement exclusivement horizontalement, ou les supports de doigt (9) peuvent être mis en mouvement exclusivement sur des tiges-glissières (15).

8. Dispositif selon la revendication 6 ou 7, dans lequel l'insert de préhenseur comporte une mécanique (10,16) qui est reliée par force de liaison au guidage forcé (5) du support de préhenseur destiné au mouvement horizontal des doigts de préhenseur avec ou sans inserts de préhenseur.

9. Dispositif selon la revendication 8, dans lequel, concernant la mécanique de mise en mouvement des doigts de préhenseur avec ou sans inserts d'orifice, il s'agit d'un piston pneumatique ou hydraulique (6).

10. Dispositif selon au moins l'une des revendications précédentes, dans lequel les éléments d'assemblage présents (16) destinés à la régulation de la vitesse d'ouverture et de fermeture des doigts de préhenseur (1) avec ou sans inserts d'orifice sont configurés en ligne droite ou avec des courbes.
